# EUROPÄISCHE PATENTSCHRIFT

(11) **EP 0 878 520 B1**
(45) Veröffentlichungstag und Bekanntmachung des Hinweises auf die Patenterteilung: **05.03.2003**
(21) Anmeldenummer: 98108559.0
(22) Anmeldetag: 11.05.1998
(51) Int. Cl.: C09D 5/18, C08K 3/00, A62B 17/00, C23C 26/00, C04B 41/87, C04B 41/83

(54) **Zusammensetzung für hochtemperaturfeste, pyrolitisch keramisierende Beschichtungen**
Composition for refractory, pyrolitically ceramic forming coatings
Composition pour revêtements réfractaires, pyrolitiquement céramisables

(30) Priorität: 12.05.1997 DE 19719876
(43) Veröffentlichungstag der Anmeldung: 18.11.1998
(73) Patentinhaber: FRAUNHOFER-GESELLSCHAFT ZUR FÖRDERUNG DER ANGEWANDTEN FORSCHUNG E.V., 80636 München (DE)
(72) Erfinder: Kuglstatter, Werner, 76327 Pfinztal (DE); Wasmann, Friedrich, Wilhelm, 76327 Pfinztal (DE); Menke, Klaus, 76646 Bruchsal (DE); Hüls, Adrian, 76131 Karlsruhe (DE)

(56) Entgegenhaltungen:
- EP-A- 0 568 354
- EP-A- 0 733 547
- DE-C- 3 931 959
- US-A- 3 623 904

## Beschreibung

Die Erfindung betrifft eine Zusammensetzung für hochtemperaturfeste keramisierende Beschichtungen mit einer Elastomer-Matrix aus der Gruppe der Dimentylsiloxane oder Polyurethane und darin eingebetteten anorganischen Füllstoffen.

Polyurethan- und Silikonelastomere sind, wie alle organischen, gummielastischen Stoffe, leicht brennbare und pyrolytisch sehr schnell zerfallende Polymere. Aus der Luft- und Raumfahrttechnik sind jedoch Diphenyl- und Phenylmethylsiloxan Copolymere bekannt, die mit Siliciumcarbid, Siliciumdioxid, Silikaten und/oder Kohlefasern hohe Pyrolyse- und Wärmestandfestigkeit, sowie Wärmeschutz durch ablative Pyrolyse ermöglichen (US 4.581.391, US 3.268.359, US 3.623.904). Der Nachteil dieser Materialien ist die aufwendige und damit teure Herstellung der phenylsubstituierten Siloxane, sowie die nur in engen Grenzen einstellbaren mechanischen Eigenschaften dieser Materialien.

Polyurethanelastomere haben den Vorteil, daß sie über Vernetzungsadditive und Isocyanathärter von weich- bis hart oder zähelastisch einstellbar sind. Sie sind jedoch in der Regel leicht brennbar und zersetzen sich in der Pyrolyse im Hochtemperaturbereich sehr schnell. Als Isolationsmaterialien von Raketenfesttreibstoffen sind Polyurethanschichten bekannt, die mit thermisch endotherm sich zersetzenden Füllstoffen wie Dolomit, Magnesit, Calcit oder Oxamid gefüllt sind (DE 35 28 505, 36 43825). Sie zerfallen jedoch bei der Beflammung oder Beaufschlagung mit hohen Temperaturen sehr schnell.

Weitere Elastomere mit hoher Flammschutz- und Wärmestandfestigkeit sind bisher nur in Form der sehr aufwendig herzustellenden anorganischen Phosphor/Stickstoff- oder den als Polysilazan bekannten Stiffstoff/Siliciumpolymere bekannt.

Für Feuer- und Flammschutz im Hochtemperaturbereich besteht jedoch Bedarf an leicht herzustellenden und damit preisgünstig verfügbaren Elastomermaterialien. Die Anwendungen solcher Materialien liegen vor allem im Personenschutz, z.B. als flexible Flammschutzschichten für Textilien, oder im Bauten- und Geräteschutz, z.B. für Dichtungsstoffe mit hoher Feuerschutzfestigkeit im Hochtemperaturbereich, oder bei Schutzüberzügen für Metall- und Keramikteile, die heißen Gasströmungen ausgesetzt sind.

Der Erfindung liegt die Aufgabe zugrunde, Polyurethan- und Silikonelastomere, die kommerziell in großen Mengen und preiswert zur Verfügung stehen, aber in der Regel eine geringe Hochtemperaturfestigkeit besitzen oder leicht brennbar sind, so mit geeigneten Füllstoffen auszustatten, daß sie je nach Einstellung weich-, hart- oder zähelastische Materialkonsistenz besitzen, bei der Beflammung jedoch eine poröse, keramische Schicht mit hoher Festigkeit und hohem Wärmeisolationsvermögen ausbilden.

Erfindungsgemäß werden diese Eigenschaften erreicht, wenn in die prepolymeren Dimethylsiloxan- bzw. Polyurethankomponenten eine Füllstoffkombination von Siliciumcarbid und Siliciumdioxid in Kombination mit Kohlenstoff-, Keramik- oder Silikatfasern in definierten Verhältnissen eingearbeitet wird. Die Einarbeitung dieser Füllstoffe geschieht durch einen mehrstündigen Knetprozeß, der in Vertikal- oder Horizontalknetern vorgenommen werden kann.

Die Gewichtsanteile und die Partikelgröße der Füllstoffkomponenten werden dabei so gewählt, daß am Ende der Compoundierung ein im Gießprozeß verarbeitbarer Slurry entsteht, der nach Zumischen des Härters in entsprechende Formen gegossen, gespritzt oder zu Schutzüberzügen verarbeitet und ausgehärtet werden kann.

Das eingesetzte Verhältnis der Füllstoffkomponenten untereinander wird außerdem so gewählt, daß sie bei der Beflammung oder Einwirkung heißer Gase sich zu keramikähnlichen Schichten verbinden. Diese Schichten schmelzen nicht, auch wenn sie mit Temperaturen von 2000K und höher belastet werden. Nach Pyrolyse des polymeren Grundmaterials bilden sie eine feste poröse keramikartige Isolationsschicht aus, die den Wärmedurchgang hemmt und die Pyrolyse des darunter liegenden Isolationsmaterials verzögert. Auf diese Weise werden schon mit geringen Schichtdicken hohe Widerstandswerte gegen den Wärmefluß sowie hohe Feuer- und Flammschutzfestigkeiten erreicht.

Um diese Wirkung zu erreichen, werden etwa 35 bis max. 60 Mass.%, vorzugsweise 40 - 50 Mass.% anorganische Füllstoffe aus wenigstens Siliciumcarbid und Siliciumdioxid in Partikelform und anorganischen Fasern in das prepolymere Basismaterial des Polyurethan- oder Silikonharzes eingearbeitet. Das Siliciumcarbid, das in feiner mittlerer Korngröße von 1 - 15 µm, vorzugsweise 1 - 5 µm, vorliegt, wird dabei mit einem Anteil von 1 8 Mass.%, vorzugsweise 3 - 5 Mass.% eingesetzt. Der zweite Füllstoff, das Siliciumdioxid, kommt als amorphes Quarzpulver mit einer mittleren Korngröße von 2 - 50 µm, vorzugsweise 5 - 15 µm, zum Einsatz. Der Konzentrationsbereich im gefüllten Kunststoff beträgt 20 - 50 Mass.%, vorzugsweise 30 - 45 Mass.%. Als weitere wichtige Komponente werden 0,5 bis 5,0 Mass.% eines hochdispersen, hydrophilen Metalloxids aus der Gruppe Siliciumdioxid, Titandioxid, Zirkondioxid mit einer mittleren Korngröße von 0,01 bis 2,0 µm, vorzugsweise bis 0,05µm, zugesetzt. Die vorgenannten Füllstoffe sind vornehmlich für die Bildung der keramisierenden Schicht maßgeblich.

Die vierte wichtige Komponente, die vor allem zur hohen Festigkeit und Stabilität der sich bildenden Keramikschicht beiträgt, sind Kohlenstoff-, Keramik- oder Silikatfasern. Kohlenstoffasern nehmen wegen ihres geringen spezifischen Gewichtes, ihrer hohen mechanischen Festigkeit und ihrer hohen Pyrolysebeständigkeit bis zu sehr hohen Temperaturen eine Sonderstellung ein. Sie werden mit einer durchschnittlichen Länge von 0,5 - 10mm, vorzugsweise 1-5mm, eingesetzt. Ihr Anteil im fertigen Compound beträgt 0,5-6 Mass.%, vorzugsweise 2-4 Mass.%.

Keramik- oder Silikatfasern müssen aufgrund der höheren Dichte auch in höheren Gewichtsanteilen zugegeben werden. So werden beispielsweise Alumosilikatfasern mit 2-10 Mass.%, vorzugsweise 5-8 Mass.% oder Zirkondioxidfasern mit 5-20 Mass.%, vorzugsweise 7-15 Mass.%, zugesetzt. Die durchschnittliche Länge der Keramikfasern beträgt wie bei den Kohlenstoffasern 0,5-10mm, vorzugsweise 1-5mm.

Für die Verfestigung der keramischen Schicht, die Regulierung des Aufquellungsgrades und einen hohen Wärmedurchgang sind die hochdispersen hydrophilen Metalloxide, wie Siliciumdioxid, Titandioxid oder Zirkondioxid maßgeblich. Wenigstens eines dieser Oxide, z.B. SiO₂ wird im mittleren Korngrößenbereich von 0,01-0,5µm zugesetzt. Die damit ausgestatteten Materialien zeigen ein gutes Aufquellverhalten bei guter Festigkeit der porösen Keramikschicht. Titandioxid, das mit einer mittleren Korngröße von 0,01 - 2µm, vorzugsweise bis 0,05µm zum Einsatz kommt, wird mit einem Anteil von 0,5-3 Mass.%, vorzugsweise 1-2 Mass.% eingesetzt. Sein Zusatz bewirkt eine stärkere Behinderung des Wärmedurchgangs, ohne daß damit eine stärkere Aufquellung bei der Beflammung und Pyrolyse verbunden ist. Zirkondioxid kann mit einem Anteil von 1-5 Mass.% mit einer mittleren Partikelgröße von 0,02 - 2µm zugesetzt werden. Gegenüber herkömmlichen Materialien sind die vorgenannten hochdispersen, amorphen Füllstoffe vor allem für eine bis zu 50% geringere Aufquellung bei gleicher Wärmedämmung und damit für eine Reduzierung der Ablation verantwortlich.

Polyurethanelastomere, die mit diesen Füllstoffkombinationen ausgestattet sind, erfüllen die gestellten Forderungen nach hoher Flammschutz- und Wärmestandfestigkeit, zeigen aber immer noch ein ablatives Verhalten, d.h. eine Ablösung der pyrolisierten keramisierten Schichten. In einer Weiterbildung der erfindungsgemäßen Zusammensetzung mit einer Polyurethan-Matrix wird nun eine starke Verminderung des Wärmedurchgangs verbunden mit einer verbesserten Festigkeit und Anbindung der keramisierten Schichten durch den Zusatz von niedrig schmelzenden Alkali-, Erdalkali-, Silicium- oder Ammoniumpolyphosphat zu der Standardkombination von Siliciumcarbid, amorphem Siliciumdioxid und anorganischen Fasern erreicht. Vorzugsweise wird dabei Ammoniumpolyphosphat in nativer oder verkapselter Form mit einem Anteil von 1-15 Mass.%, vorzugsweise 4-8 Mass.% eingesetzt. Ein Compound mit polymerisiertem, hydroxyterminiertem Polybutadien als Matrixmaterial zeigt mit dieser Füllstoffkombination höchste Werte beim Wärmedurchgangswiderstand sowie eine sehr hohe Festigkeit der pyrolisierten, keramisierten Schichten.

Aufquellung, Wärmedurchgang und Standfestigkeit der bei der Pyrolyse entstehenden Schichten werden, wie die mechanischen Eigenschaften auch, wesentlich durch das Polymermaterial bestimmt. Dafür werden an sich bekannte isocyanathärtende Polyurethanprepolymere auf der Basis von hydroxyterminiertem Polybutadienharz, Polyesterdiol- und Polyetherdiol oder aus Dimethylsiloxanen bestehenden Silikonharze eingesetzt. Als prepolymere Silikonharzkomponenten kommen dabei dimethylgruppenhaltige Siloxane mit olefinischen Endgruppen in Frage, die mit Silanhärtern mittleren Molekulargewichts und Eisenoxid sowie Spuren von Platin/Palladiumkatalysatoren bei Temperaturen von 50°C - 175°C ausgehärtet werden. Um eine besonders feste keramische Schicht mit geringerer Aufquellung zu bekommen, hat sich ein mehrstündiges (im Bereich von 10h) Tempern des bereits vorgehärteten gefüllten Silikonharzes bei 175°C erwiesen. Die von diesen Elastomermaterialien bei der Beflammung und Pyrolyse erzeugten Keramikschichten waren stets sehr fest mit dem nicht pyrolisierten Grundmaterial oder dem Substrat aus Metallblech oder Keramik, auf die die Elastomerschicht aufgezogen wurde, verbunden. Die mechanischen Eigenschaften des Silikonharzes werden durch das Tempern nur unwesentlich beeinflußt. Es zeigt sich eine leichte Erhöhung der Zugfestigkeit und des E-Moduls. Bei 20°C liegen die Werte des gefüllten Materials bei 1,0-2,2 N/mm² max. Zugfestigkeit, 12%-60% Reißdehnung und einem E-Modul von 4-13 N/mm².

Mit den gefüllten Polyurethanharzen ist je nach Vernetzungsgrad des Bindemittels ein größerer Bereich mechanischer Festigkeitswerte einstellbar. Polybutadien-, Polyester- und Polyetherurethane lassen sich in bekannter Weise mit Triisocyanaten wie Biuret oder Uretdion verknüpften Hexamethylendiisocyanat, bevorzugt aber mit Triolen wie 1,2,4-Butantriol, Trimethylolpropan oder 1,2,6-Hexantriol und Isophorondiisocyanat (IPDI) aushärten und vernetzen. Die Kombination von Triol und IPDI bewirkt dabei eine sehr günstige, über Beschleuniger wie Eisenacetylacetonat einstellbare Verarbeitungszeit des fertig gemischten Slurries. Die Härtungscharakteristik ist damit sowohl auf mehr Zeit beanspruchende Gieß- oder Schleuderverfahren ebenso wie die eine schnelle Gelierung erfordernde Spritzgieß- oder Reactive-Injection-Molding (RIM) Verfahren einstellbar.

Ebenso lassen sich mit der Konzentration von Triol und Diisocyanat die Vernetzungsdichte und damit die mechanischen Eigenschaften des gefüllten Polyurethanxompounds in weiten Bereichen steuern. Für ein faserfreies Poylyurethancompound sind damit Zugfestigkeiten von 1-2 N/mm², E-Moduli von 1-5 N/mm² und Reißdehnungen von über 100% erreichbar. Für ein faserhaltiges, mit hoher 1,2,4-Butantriol-Konzentration vernetztes Compound werden Zugfestigkeiten über 10 N/mm² und E-Moduli über 100 N/mm² bei Reißdehnungen von 8%-20% einstellbar. Ein derart hoch vernetztes gefülltes Polybutadien- oder Polyesterurethan zeigt auch gute Festigkeiten der pyrolisierten Keramikschicht, verbunden mit guter Sperrwirkung gegen Wärmedurchgang.

Die Polyurethancompounds lassen sich in Tauch- oder speziellen Beschichtungsverfahren auf Textilien aufbringen, die z.B. zu Feuerschutzhandschuhen oder Überzügen für den Personen- und Körperschutz verarbeitet werden können. Weiterhin lassen sich die gefüllten Polyurethanelastomere in Folge ihres guten Adhäsionsverhaltens im Verarbeitungs- und im ausgehärteten Zustand mit Vorteil als Beschichtungsmassen, als Folien, Abdeckbahnen oder Laminate für den Bauten- und Geräteschutz einsetzen. Eine bevorzugte Anwendung sind Schutzüberzüge für Metall- und Keramikteile, die minutenlang heißen Gasströmungen ausgesetzt sind.

### Beispiele

1. Für die Herstellung eines Polyurethan-gebundenen Flammschutzmaterials wird zunächst der gefüllte Slurry aus Prepolymer, Vernetzungsmitteln, Alterungsschutzmitteln und Füllstoffen in einem thermostatisch beheiz- und evakuierbaren Horizontal- oder Vertikalkneter durch einen mehrstündigen Knetprozeß hergestellt. Nach Zumischen und kurzem Einkneten des Isocyanathärters wird der fertig gemischte Slurry in entsprechende Formen gegossen, geschleudert, eingespritzt oder im Tauchverfahren aufgetragen. Entsprechend der Reaktivität des Härters erfolgt die Aushärtung über einige Stunden bei 60-70°C.
   In einem Standardansatz werden 477,6 g hydroxyterminiertes Polybutadien mit der Molmasse 2800 g/Mol und dem Equivalentgewicht von 1320 g/Eq zusammen mit 5,5 g 1,2,4-Butantriol, 1,9 g Antioxidans und 50mg Eisenacetylacetonat als Beschleuniger in einem 21 Vertikalkneter bei 60°C vorgelegt. Anschließend werden 43,8 g Siliciumcarbid mit einer mittleren Partikelgröße von 3 µm, 18,3 g Titandioxid mit einer Korngröße von 0,03 µm und 326,6 g amorphes Siliciumdioxid mit einer mittleren Korngröße von 8-10µm nacheinander bei 60°C und unter Vakuum (Druck etwa 1mbar) über 2 h eingeknetet. In weiteren 2 h werden anschließend 68,9 g Alumosilikatfasern von 2-3mm Länge eingearbeitet. Die Mischung wird nach etwa 2h geknetet, dann nach Zumischen und 10-minütigem Einarbeiten von 57,4g Isophorondiisocyanat als fertig gemischter Slurry zum Aushärten in eine mit Fluorpolymer beschichtete Form gegossen oder anderweitig verarbeitet.
   Der Slurry besitzt bei 50°C eine Topfzeit von über 2h und eine Fließviskosität von etwa 32 Pas. Das fertige Elastomer zeigt nach der Aushärtung über 16h bei 65°C eine maximale Zugfestigkeit von 2,5 N/mm², eine Reißdehnung von 68% und einen E-Modul von 12 N/mm² bei 20°C. Dichte: 1,28 g/cm³ bei 20°C.
   Wird eine auf Stahlblech gegossene und ausgehärtete 5 mm starke Isolationsschicht mit einer 2000 K heißen Flamme beaufschlagt, sind nach einer Minute noch 1,6mm unpyrolisiertes Material und eine um 41% aufgequollene poröse Keramikschicht vorhanden. Die Rückseitentemperatur nach 60s Beflammung beträgt 126°C.
   Wird der Slurry nach beendetem Mischvorgang in antihaftbeschichtete Formen gegossen, können flexible Feuerschutzplatten oder Formteile hergestellt werden. Durch Beschichtung auf textile Gewebe sind Flammschutzbahnen als Meterware herstellbar. Die Verarbeitung im Spritz- oder Schleuderverfahren ermöglicht das Aufbringen einer Innenschutzisolation für eine Brennkammer, für Heißgase führende Rohre od. dgl.
   Wird der Slurry durch mehrmaliges Tauchen auf textile Gebilde wie Handschuhe, Westen od. dgl. aufgetragen, lassen sich flexible Kleidungsstücke herstellen, die auch bei hohen Temperaturbelastungen für begrenzte Zeit Körperschutz bieten.
2. In gleicher Weise wird ein Feuerschutzmaterial aus den Harzkomponenten: 471,7 g HTPB, 5,4 g 1,2,4-Butantriol, 1,9 g Antioxidans und 60 mg Eisenacetylacetonat und 56,7 g Isophorondiioscyanat und den Füllstoffen 43,2 g Siliciumcarbid, 384,8 g amorphes Siliciumdioxid, 37,9 g hochdisperses Zirkondioxid mit einer mittleren Körngröße von 0,08 µm, 63,6 g gekapseltes Ammoniumpolyphosphat und 34,8 g Kohlefasern mit 3-4 mm Länge hergestellt. Der am Ende des Mischprozesses erhaltene Slurry besitzt eine Verarbeitungsviskosität von 184 Pas und eine Topfzeit von 1,5h bei 50°C.
   Das fertige Material zeigt eine maximale Zugfestigkeit von 6,7 N/mm², eine Reißdehnung von 18% und einen E-Modul von 44 Nmm², Dichte: 1,30 g/cm³ bei 20°C.
   Bei der Beflammung einer 5 mm starken Isolationsschicht mit einer 2000 K heißen Flamme über 60 s steigt die Temperatur an der Rückseite auf 115°C. Zurück bleiben 1,6mm unpyrolisiertes Material und eine um 46% aufgequollene poröse Keramikschicht. Werden 5mm Isolationsschicht nach Beispiel 2 bei 1400 K beflammt, dauert es 6 Minuten, bis auf der Rückseite 300°C erreicht werden.
3. Analog zum Beispiel 1 wird ein gießbarer Slurry aus 390,6 g Polyadipinsäurepolyglykolester mit einem Molekulargewicht von Mn = 2200 g/Mol und einem Equivalentgewicht von 941 g/Eq, 15g 1,2,4-Buantriol, 94,4g Isophorondiisocyanat und 10mg Eisenacetylacetonat sowie den Füllstoffen 41,5 g Siliciumcarbid, 421,5g amorphes Siliciumoxid, 10,2g hochdisperses Siliciumdioxid der mittleren Korngröße 0,02 µm und 33,4 g Kohlenstoffasern hergestellt und anschließend im Gießverfahren auf Metallplatten beschichtet. Das so hergestellte gefüllte Elastomer zeigt gute Haftung auf dem Metallblech und hart bis zähelastische mechanische Eigenschaften mit
   9,8 N/mm² Zugfestigkeit
   10,2 % Reißdehnung
   105 N/mm² E-Modul
   Dichte: 1,4g/cm³ bei 20°C.
   Die Rückseitentemperatur einer 5 mm starken Isolation nach einminütiger Beflammung bei 2000 K beträgt 193°C, die Aufquellung 23%, die Stärke des unpyrolisierten Materials etwa 1mm.
4. Analog zum Beispiel 1 werden zwei weitere Flammschutzmaterialien aus den Harzkomponenten 441,4g/477,6 g HTPB, 5,1g/5,5g 1,2,4-Butantriol, 53 g/57,4 IPDI, jeweils 59mg Eisenacetylacetonat und 1,8g/1,9g Antioxidans und den Füllstoffen 40,5 g/43,8 g Siliciumcarbid, 301,8 g/326,6 g amorphem Siliciumdioxid, 16,9 g/18,3 g hochdispersem Titandioxid mit
   a) 139,5 g Zircondioxidfasern sowie
   b) 68,9 Alumosilikaboratfasern mit jeweils 2-3 mm Länge
   hergestellt.
   Nach Aushärtung zeigen die Coumpounds zähelastische mechanische Eigenschaften mit
   2,5 bzw. 3,7 N/mm² Zugfestigkeit
   79 bzw. 27 % Reißdehnung
   7,2 bzw. 28,6 N/mm² E-Modul
   Dichte: 1,40 bzw. 1,39 g/cm³ bei 20°C.
   Die Rückseitentemperaturen einer 5 mm starken Isolationsschicht nach einminütiger Beflammung betragen im Beispiel a) 136°C bei 38% Aufquellung, im Beispiel b) 152°C bei 25% Aufquellung.
5. In einem 2l Vertikalkneter werden 515g vinylgruppenhaltige Dimethylsiloxanprepolymere mit Eisen-III-oxid und Platinkatalysator und 20g Dimethylsiloxaninhibitor und zuerst 11,3 g ultrafeinem Siliciumdioxid der mittleren Korngröße 0,02 µm, dann 46,4 Siliciumcarbid, 332,8 g amorphes Siliciumdioxid und 37,3 g Hochmodulkohlefasern über mehrere Stunden so lange geknetet, bis ein fließfähiger Slurry entsteht. Nach Abkühlen der Mischung auf 30°C werden 57,2 g Silanhärter zugegeben und für ca. 20min eingeknetet. Der so entstandene fließfähige Slurry wird, wie im 1. Beispiel beschrieben, verarbeitet. Die Aushärtung erfolgt zunächst 4h bei 50°C, anschließend 2h bei 150°C zu einem etwas weicheren und bei der Pyrolyse stärkeren aufquellenden keramisierten Material. Zehnstündiges Tempern bei 175°C bringt eine deutliche Verfestigung der entstehenden keramischen Schichten zusammen mit einer Verringerung der pyrolytischen Aufquellung. Die mechanischen Eigenschaften nach normaler Aushärtung bei
   150°C betragen:
   1,7 N/mm² Zugfestigkeit
   47% Reißdehnung
   9,8 N/mm² E-Modul
   Dichte: 1,41 g/cm³ bei 20°C.

   Der Temperaturanstieg an der Rückseite einer 5 mm starken Schicht nach einminütiger Beflammung bei 2000 K beträgt 121°C bei 88% keramisierender Aufquellung. Die unpyrolisierte Schicht mißt danach noch 3,2 mm.
6. Analog zum Beispiel 5 werden 455,4 g vinylgruppenhaltige Dimethylsiloxankomponente zusammen mit 70g Dimethylsiloxaninhibitor, 41 g SiC, 402 g amorphem SiO₂, 18 g hochdispersem Titandioxid der mittleren Korngröße 0,03 µm, 33g Kohlefasern und 50,6g Silanhärter miteinander zu einem Slurry verknetet, im Gieß-, Spritz-, Schleuder- oder Tauchverfahren verarbeitet und analog zum Beispiel 5 ausgehärtet. Die mechanischen Eigenschaften nach Temperung bei 175°C betragen:
   2,0 N/mm² maximale Zugfestigkeit
   1,6% Reißdehnung
   7,9 N/mm² E-Modul
   Dichte: 1,52g/cm³ bei 20°C.

   Der Temperaturanstieg an der Rückseite einer 5mm starken Isolation nach 60s Beflammung bei 2000 K beträgt 150°C, die Aufquellung 86% und die Stärke der nicht pyrolisierten Schicht 2,6mm.

## Patentansprüche

1. Zusammensetzung für hochtemperaturfeste, pyrolitisch keramisierende Beschichtungen mit einer Elastomer-Matrix aus der Gruppe Dimethylsiloxan, Polyurethan und darin mit 35 bis 60 Mass.%, vorzugsweise 40 bis 50 Mass.%, eingebetteten anorganischen Füllstoffen aus wenigstens 1 bis 8 Mass.%, vorzugsweise 3 bis 5 Mass.%, Siliciumkarbid mit einer mittleren Korngröße von 1 bis 15 µm, vorzugsweise 1 bis 5 µm, 20 bis 50 Mass.%, vorzugsweise 30 bis 45 Mass.% amorphem Siliciumdioxid mit einer mittleren Korngröße von 2 bis 50 µm, vorzugsweise 5 bis 15 µm, und wenigstens 0,5 bis 5,0 Mass.% eines hochdispersen, hydrophilen Metalloxids aus der Gruppe Siliciumdioxid, Titandioxid, Zirkondioxid mit einer mittleren Korngröße von 0,01 bis 2,0 µm sowie wenigstens 0,5 bis 6 Mass.% Fasern aus der Gruppe Kohle-, Keramik-, Silikatfasern mit einer durchschnittlichen Länge von 0,5 bis 10mm, vorzugsweise 1 bis 5mm.

2. Zusammensetzung nach Anspruch 1, **dadurch gekennzeichnet, daß** die Metalloxide eine mittlere Korngröße bis 0,05 µm aufweisen.

3. Zusammensetzung nach Anspruche 1 oder 2, **dadurch gekennzeichnet, daß** als anorganischer Füllstoff zusätzlich 1 bis 15 Mass.%, vorzugsweise 4 bis 8 Mass.% niedrig schmelzende Polyphosphate aus der Gruppe Alkali-, Erdalkali-, Silicium-, Ammoniumpolyphosphat enthalten sind.

4. Zusammensetzung nach Anspruch 3, **dadurch gekennzeichnet, daß** das Polyphosphat in nativer oder polymerverkapselter Form zugesetzt ist.

5. Zusammensetzung nach einem der Ansprüche 1 bis 4, **dadurch gekennzeichnet, daß** die Fasern Kohlenstoff-, Alumosilikat-, Alumosilikaborat- oder Zirkondioxidfasern sind.

6. Zusammensetzung nach einem der Ansprüche 1 bis 5, **dadurch gekennzeichnet, daß** die Elastomer-Matrix aus Polyurethan aus mit Di- oder Triisocyanaten gehärteten prepolymeren hydroxyterminierten Polybutadien, Polyesterdiolen oder Polyetherdiolen besteht und unter Zugabe der Füllstoffe mit Triolen als Vernetzungsmittel von weich bis zähelastisch und hart einstellbar ist.

7. Zusammensetzung nach Anspruch 6, **dadurch gekennzeichnet, daß** als Triole 1,2,4-Butantriol, Trimethylolpropan oder 1,2,6-Hexantriol und als Härter eine equivalente Menge Diisoxyanat, vorzugsweise Isophorondiisocyanat zugesetzt sind.

8. Zusammensetzung nach einem der Ansprüche 1 bis 5, **dadurch gekennzeichnet, daß** die Elastomer-Matrix aus Dimethylsiloxan aus prepolymeren Dimethylsiloxanen mit olefinischen Endgruppen besteht, die unter Zugabe der Füllstoffe mit Pt- und/oder Fe-III-oxidhaltigen Katalysatoren und Silanhärtern bei Temperaturen von 50 bis 175°C ausgehärtet sind.

9. Zusammensetzung nach Anspruch 10, **dadurch gekennzeichnet, daß** die gefüllte Elastomer-Matrix aus Dimethylsiloxan durch mehrstündiges Tempern bei 175°C keramisiert und verfestigt ist.

10. Zusammensetzung nach einem der Ansprüche 1 bis 9, **dadurch gekennzeichnet, daß** sie im Gieß-, Spritz- oder Schleuderverfahren in antihaftbeschichteten Formen zu Formteilen, zu Bahnenmaterial oder zu auf Metall- oder Keramiksubstraten haftenden Beschichtungen verarbeitbar ist.

11. Zusammensetzung nach einem der Ansprüche 1 bis 9, **dadurch gekennzeichnet, daß** sie im Tauch-, Laminier- oder Beschichtungsverfahren auf Bahnenmaterial oder auf vorgefertigte Gewebeteile zur Herstellung von textilen Formteilen, wie Feuerschutzhandschuhe, oder Überzügen aufgetragen ist.

## Claims

1. Composition for refractory coatings becoming ceramic via pyrolysis with an elastomer matrix from the group comprising dimethyl siloxane, polyurethane and inorganic fillers embedded therein to 35 to 60 % by mass, preferably 40 to 50% by mass, comprising at least 1 to 8% by mass, preferably 3 to 5% by mass, of silicon carbide with an average grain size of 1 to 15 mm, preferably 1 to 5 mm, 20 to 50 % by mass, preferably 30 to 45 % by mass, of amorphous silicon dioxide with an average grain size of 2 to 50 mm, preferably 5 to 15 mm, and at least 0.5 to 5.0 % by mass of a highly dispersed, hydrophilic metal oxide from the group comprising silicon dioxide, titanium dioxide, zirconium dioxide with an average grain size of 0.01 to 2.0 mm and also at least 0.5 to 6% by mass of fibres from the group comprising carbon, ceramic, silicate fibres with an average length of 0.5 to 10 mm, preferably 1 to 5 mm.

2. Composition according to Claim 1, **characterised in that** the metal oxides have an average grain size of up to 0.05 mm.

3. Composition according to Claim 1 or 2, **characterised in that** 1 to 15 % by mass, preferably 4 to 8 % by mass of low-melting polyphosphates from the group comprising alkali, alkaline earth, silicon, ammonium polyphosphate are additionally included as inorganic filler.

4. Composition according to Claim 3, **characterised in that** the polyphosphate is added in native or polymer-encapsulated form.

5. Composition according to one of Claims 1 to 4, **characterised in that** the fibres are carbon, alumo-silicate, alumosilica-borate or zirconium dioxide fibres.

6. Composition according to one of Claims 1 to 5, **characterised in that** the elastomer matrix of polyurethane is composed of prepolymeric hydroxy-terminated polybutadien, polyester diols or polyether diols cured with di- or tri-isocyanates, and may be adjusted from soft to tough-flexible and hard by adding the fillers with triols as curing agent.

7. Composition according to Claim 6, **characterised in that** 1,2,4-butane triol, trimethylolpropane or 1,2,6-hexane triol is added as triols and an equivalent amount of di-isoxyanate, preferably isophorone di-isocyanate, is added as curing agent.

8. Composition according to one of Claims 1 to 5, **characterised in that** the elastomer matrix of dimethyl siloxane is composed of prepolymeric dimethyl siloxanes with olefine end groups, which upon addition of the fillers are age-hardened at temperatures of 50 to 175°C with catalysts containing Pt and/or Fe III oxide and silane hardeners.

9. Composition according to Claim 10, **characterised in that** the filled elastomer matrix of dimethyl siloxane is rendered ceramic and solidified by annealing at 175°C for several hours.

10. Composition according to one of Claims 1 to 9, **characterised in that** it may be processed using the casting, injection moulding or centrifuge process in moulds coated with non-stick material into moulded parts, web material or coatings adhering to metal or ceramic substrates.

11. Composition according to one of Claims 1 to 9, **characterised in that** it is applied to web material or to prefabricated fabric parts using the dipping, laminating or coating process for the production of textile moulded parts such as fireproof gloves or coverings.

## Revendications

1. Composition pour revêtements se transformant en céramique par pyrolyse, résistants aux hautes températures, avec une matrice d'élastomère du groupe constitué par le diméthylsiloxane et le polyuréthane et comportant de 35 à 60 % massique de préférence de 40 à 50 % massique de charges inorganiques enrobées formées de 1 à 8 % massique, de préférence de 3 à 5 % massique de carbure de silicium avec une granulométrie moyenne de 1 à 15 µm, de préférence de 1 à 5 µm, de 20 à 50 % massique de préférence de 30 à 45 % massique de dioxyde de silicium amorphe avec une granulométrie moyenne de 2 à 50 µm, de préférence de 5 à 15 µm, et au moins de 0,5 à 5,0 % massique d'un oxyde métallique hydrophile hautement dispersé, du groupe formé par le dioxyde de silicium, le dioxyde de titane, le dioxyde de zirconium avec une granulométrie moyenne de 0,01 à 2,0 µm ainsi qu'au moins 0,5 à 6 % massique de fibres du groupe constitué par les fibres de carbone, de céramique, de silicate, avec une longueur moyenne de 0,5 à 10 mm, de préférence de 1 à 5 mm.

2. Composition selon la revendication 1,
**caractérisée en ce que**
les oxydes métalliques présentent une granulométrie moyenne allant jusqu'à 0,05 µm.

3. Composition selon les revendications 1 ou 2,
**caractérisée en ce qu'**
on y trouve en outre comme charge inorganique de 1 à 15 % massique, de préférence de 4 à 8 % massique, de polyphosphates à bas point de fusion, du groupe des polyphosphates de métaux alcalins, de métaux alcalino-terreux, de silicium et d'ammonium.

4. Composition selon la revendication 3,
**caractérisée en ce que**
le polyphosphate est ajouté sous une forme native ou encapsulée dans un polymère.

5. Composition selon l'une des revendications 1 à 4,
**caractérisée en ce que**
les fibres sont des fibres de carbone, d'alumino-silicate, d'alumino-silicaborate ou de dioxyde de zirconium.

6. Composition selon l'une des revendications 1 à 5,
**caractérisée en ce que**
la matrice d'élastomère se compose de polyuréthane de polybutadiène, de polyester diols ou de polyéther diols à terminaison hydroxy prépolymères durcis avec des di- ou des tri-isocyanates, et est réglable, de l'état mou à viscoélastique et dur par addition de la charge avec des triols comme agents réticulants.

7. Composition selon la revendication 6,
**caractérisée en ce qu'**
on ajoute comme triols le 1,2,4-butanetriol, le triméthylolpropane ou le 1,2,6-hexanetriol, et comme durcissant une quantité équivalente de dusocyanate, de préférence de diisocyanate d'isophorone.

8. Composition selon l'une des revendications 1 à 5,
**caractérisée en ce que**
la matrice d'élastomère se compose de diméthylsiloxane constitué de diméthylsiloxanes prépolymères avec groupes d'extrémité oléfiniques, qui sont durcis par addition des charges avec des catalyseurs contenant de l'oxyde de Pt et/ou de Fe III et des durcisseurs de silane à des températures de 50 à 175°C.

9. Composition selon la revendication 8,
**caractérisée en ce que**
la matrice d'élastomère en diméthylsiloxane remplie est transformée en céramique et solidifiée par un traitement de plusieurs heures à 175°C.

10. Composition selon l'une des revendications 1 à 9,
**caractérisée en ce qu'**
elle est transformable, dans un procédé de coulée, d'injection ou de coulée centrifuge dans des moules revêtus d'un anti-adhésif, en matériaux en lés ou en revêtements adhérents sur des substrats de métal ou de céramique.

11. Composition selon l'une des revendications 1 à 9,
**caractérisée en ce qu'**
elle est déposée dans un procédé d'immersion, de laminage ou d'enduction sur un matériau en lés ou sur des pièces de tissus antérieurement préparées en vue de la production d'articles textiles, comme des gants de protection contre le feu, ou des vêtements.
